# EUROPÄISCHE PATENTSCHRIFT

(11) **EP 2 016 148 B1**
(45) Veröffentlichungstag und Bekanntmachung des Hinweises auf die Patenterteilung: **04.04.2012**
(21) Anmeldenummer: 07728703.5
(22) Anmeldetag: 02.05.2007
(51) Int. Cl.: C09J 7/02

(54) **VERWENDUNG EINES BEIDSEITIG BESCHICHTETEN TRÄGERS ZUM VERKLEBEN DURCH KALTVERSIEGELUNG**
USE OF A DOUBLE-COATED CARRIER FOR COLD SEAL
UTILISATION D'UN SUPPORT REVÊTU BILATÉRALEMENT POUR VERNISSAGE À FROID

(30) Priorität: 02.05.2006 EP 06113375
(43) Veröffentlichungstag der Anmeldung: 21.01.2009
(73) Patentinhaber: BASF SE, 67056 Ludwigshafen (DE)
(72) Erfinder: URBAN, Dieter, 67346 Speyer (DE); TORRES LLOSA, Jose Maria, 67071 Ludwigshafen (DE); WULFF, Dirk, 67105 Schifferstadt (DE); WEISS, Axel, 67346 Speyer (DE); ARISANDY, Christofer, 68163 Mannheim (DE)
(86) Internationale Anmeldenummer: PCT/EP2007/054249
(87) Internationale Veröffentlichungsnummer: WO 2007/125126

(56) Entgegenhaltungen:
- WO-A-2007/030319
- US-A- 4 425 176
- DATABASE WPI Week 199649 Derwent Publications Ltd., London, GB; AN 1996-493576 XP002443393 & JP 08 253741 A (SEKISUI CHEM IND CO LTD) 1. Oktober 1996 (1996-10-01)
- DATABASE WPI Week 199039 Derwent Publications Ltd., London, GB; AN 1990-295017 XP002443394 & JP 02 208382 A (KANSAI PAINT CO LTD) 17. August 1990 (1990-08-17)

## Beschreibung

Die Erfindung betrifft die Verwendung beidseitig beschichteter Träger zum Verkleben durch Kaltversiegelung, dadurch gekennzeichnet ist, dass der Träger auf der einen Seite (im folgenden als Vorderseite bezeichnet) eine äußere Schicht eines Haftklebstoffs aufweist und auf der anderen Seite (im nachfolgenden als Rückseite bezeichnet) eine äußere Schicht einer unpolaren Release-Beschichtung aufweist, die bei 20°C mit Wasser einen Kontaktwinkel größer 85° ausbildet, wobei jeweils die mit dem Haftklebstoff beschichteten Vorderseiten in Kontakt gebracht werden.

Verpackungen werden häufig durch Kaltversiegelung von beidseitig beschichteten Trägern hergestellt. Derartige Träger sind auf einer Seite (im nachfolgenden als Vorderseite bezeichnet) mit einem Klebstoff beschichtete, der für die Kaltversiegelung geeignet ist. Die Träger sind vor ihrer Verwendung im allgemeinen zu einer Rolle aufgewickelt. Dabei kommt die mit Klebstoff beschichtete Vorderseite naturgemäß in Kontakt mit der Rückseite des Trägers. Damit der Klebstoff nicht an der Rückseite haftet (wodurch die gesamte Rolle unbrauchbar würde), ist die Rückseite des Trägers mit einer Release-Schicht beschichtet.

Der Klebstoff und die Release-Schicht sind so ausgewählt, dass sie nicht aneinander haften.

Im allgemeinen wird als Klebstoff ein Naturkautschuk verwendet und als Release-Schicht z. B. ein Polyamid. Der unpolare Naturkautschuk haftet nicht oder kaum auf dem polaren Polyamid. In US 6613430 und in WO 01/18140 werden jeweils mehrschichtige filmförmige Materialien beschrieben, welche auf einer Außenseite des filmförmigen Materials mit einem Kaltsiegelklebstoff und auf der gegenüberliegenden Außenseite mit einer Releasebeschichtung beschichtet sind. Ein Kaltsiegelklebstoff zeichnet sich dabei u.a. dadurch aus, dass er nicht-klebrig ist gegenüber allen anderen Oberflächen außer gegen sich selbst. Als typische Kaltsiegelklebstoffe werden natürlicher und synthetischer Kautschuk genannt.

Gewünscht sind Träger, welche sich für die Herstellung von Verpackungen durch Kaltversiegelung eignen, bei denen aber auch andere Klebstoffe als Naturkautschuke verwendet werden können. Die Träger sollen gute anwendungstechnische Eigenschaften haben, insbesondere eine hohe Siegelnahtfestigkeit und eine gute Blockfestigkeit gegen über der Release-Beschichtung.

Aufgabe der vorliegenden Erfindung war, eine derartige Verwendung für derartige Träger zur Verfügung zu stellen.

Demgemäss wurde eine Verwendung für den eingangs definierte Träger gefunden.

Zur Haftklebstoff-Beschichtung

Der Träger hat auf einer Seite (Vorderseite) eine äußere Schicht eines Haftklebstoffs.

Bei der Beschichtung mit dem Haftklebstoff wird eine bei Raumtemperatur (20°C) permanent klebrige Beschichtung verstanden.

Der Haftklebstoff sollte vorzugsweise eine gute Adhäsion (Klebrigkeit) verbunden mit einer guten Kohäsion (innere Festigkeit in der Klebstoffschicht) haben.

Der Haftklebstoff hat daher bei 20°C vorzugsweise eine Schälfestigkeit (als Maß für die Adhäsion) von mindestens 1 N/2,5 cm gemäß nachstehender Meßmethode. Vorzugsweise beträgt die Schälfestigkeit 1 bis 30, besonders bevorzugt 5 bis 25, ganz besonders bevorzugt 10 bis 20 N /2,5 cm.

Die Scherfestigkeit als Maß für die Kohäsion ist vorzugsweise größer als 10 Minuten gemäß nachstehender Meßmethode. Vorzugsweise beträgt die Scherfestigkeit 10 bis 3000 Minuten, besonders bevorzugt 100 bis 2500 Minuten, ganz besonders bevorzugt 500 bis 2000 Minuten.

### Zu den Prüfmethoden

Der Haftklebstoff wird mit 20 g/m2 (fest) auf Polethylenfolie beschichtet und 3 Minuten bei 90°C getrocknet.

Zur der Bestimmung der Schälfestigkeit (Adhäsion) wird ein 2,5 cm breiter Prüfstreifen auf ein chromiertes V2A-Prüfblech geklebt und mit einer 1 kg schweren Rolle 1 mal angerollt. Er wird dann mit einem Ende in die oberen Backen einer Zug-Dehnungs-Prüfapparatur eingespannt. Der Klebestreifen wird mit 300 mm/min unter einem 180° Winkel von der Prüffläche (V2A-Stahl) abgezogen d.h. der Klebestreifen wurde umgebogen und parallel zum Prüfblech abgezogen und der dazu benötigte Kraftaufwand gemessen. Das Maß für die Schälfestigkeit ist die Kraft in N/2 cm, die sich als Durchschnittswert aus fünf Messungen ergab (entspricht AFERA Standard Methode). Die Schälfestigkeit wird 24 Stunden nach der Verklebung bestimmt.

Zur Bestimmung der Scherfestigkeit werden die Prüfstreifen mit einer verklebten Fläche von 25 mm2 auf ein chromiertes V2A-Prüfblech geklebt, mit einer 1 kg schweren Rolle 1 mal angerollt, 10 min gelagert (im Normklima, 1 bar, 21 °C) und anschließend hängend mit einem 1,5 kg Gewicht belastet (im Normklima, 1 bar, 21 °C). Das Maß für die Scherfestigkeit war die Zeit bis zum Abfallen des Gewichts im Minuten; es wird jeweils der Durchschnitt aus 5 Messungen berechnet (entspricht PSTC Standard Methode).

Der Haftklebstoff enthält vorzugsweise ein synthetisches polymeres Bindemittel (Haftklebstoff-Polymer) und ggf. weitere Zusatzstoffe.

Das Haftklebstoff-polymer ist vorzugsweise durch radikalische Polymerisation von Monomeren erhältlich ist.

Vorzugsweise handelt es sich bei mehr als 50 Gew. % dieser Monomeren um sogenannte Hauptmonomere, ausgewählt aus C1 bis C20 Alkyl(meth)acrylaten, Vinylestern von bis zu 20 C-Atome enthaltenden Carbonsäuren, ethylenisch ungesättigten Nitrilen, Vinylhalogeniden, Vinylethern von 1 bis 10 C Atome enthaltenden Alkoholen, oder Mischungen dieser Monomeren.

Das Polymer besteht vorzugsweise zu mindestens 50 Gew.- %, bevorzugt zu mindestens 70 Gew.- %, besonders bevorzugt zu mindestens 85 Gew.- % aus sogenannten Hauptmonomeren.

Besonders bevorzugt besteht das Haftklebstoff-polymer zu mehr als 50 Gew. %, insbesondere zu mehr als 70 Gew. % und ganz besonders bevorzugt zu mehr als 85 Gew. % aus C1 bis C20 Alkyl(meth)acrylaten, insbesondere C 2 bis C10 Alkyl(meth)-acrylaten.

Zu nennen sind z. B. (Meth)acrylsäurealkylester mit einem C1-C10-Alkylrest, wie Methyl-methacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat und Vinylacetat.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

### Beispiele für Nitrile sind Acrylnitril und Methacrylnitril

Ganz besonders bevorzugt sind Methylacrylat, Methylmethacrylat, Ethylacrylat, n-Butylacrylat, n-Hexylacrylat, Octylacrylat und 2-Etyhlhexylacrylat sowie Mischungen dieser Monomere.

Das Haftklebstoff-polymer kann neben den Hauptmonomeren noch weitere Monomere enthalten. Genannt seien insbesondere vinylaromatische Verbindungen, wie Styrol, Vinyltoluol, a- und p-Methylstyrol, a-Butylstyrol, 4-n-Butylstyrol, 4-n-Decylstyrol und Kohlenwasserstoffe mit 4 bis 8 C-Atomen und ein oder zwei olefinischen Doppelbindungen wie Ethylen, Butadien, Isopren und Chloropren.

Neben den Hauptmonomeren und weiteren Monomeren kann das Polymer Hilfsmonomere mit funktionellen Gruppen enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Hilfsmonomere sind z. B. auch Hydroxylgruppen enthaltende Monomere, insbesondere C1-C10-Hydroxyalkyl(meth)acrylate, (Meth)acrylamid oder Phenyloxyethylglykolmono-(meth-)acry-lat, Glycidylacrylat, Glycidylmethacrylat, Amino- (meth-)acrylate wie 2-Aminoethyl- (meth)acrylat.

Besonders bevorzugt enthält das Haftklebstoff-Polymer Hilfsmonomere mit einer Carbonsäuregruppe, insbesondere Acrylsäure; der Gehalt beträgt vorzugsweise 0,1 bis 5 Gew. %, bezogen auf das Polymer.

In Betracht kommen auch Haftklebstoffe, deren Klebstoff-Eigenschaften durch photochemische Vernetzung des Haftklebstoff-Polymeren, z. B. durch Bestrahlung mit Elektronenstrahlen oder UV Licht eingestellt werden können.(acResin® der BASF)

Photochemisch vernetzbar ist das Haftklebstoff-Polymer z.B. wenn Wasserstoffprotonen von der Polymerhauptkette photochemisch, insbesondere auch unter Verwendung eines Fotoinitiators oder durch Elektronenstrahlen abgetrennt werden können, so dass ein Radikal entsteht, welches weitere chemische Reaktionen eingehen kann.

Der Haftklebstoff kann dazu einen Fotoinitiator enthalten.

Beim Fotoinitiator kann es sich z. B. um sogenannte α-Spalter handeln, das sind Fotoinitiatoren, bei denen eine chemische Bindung gespalten wird, so dass 2 Radikale entstehen, die die weiteren Vernetzungs- oder Polymerisationsreaktionen initiieren.

Genannt seien z. B. Acylphosphinoxide (Lucirin® Marken der BASF), Hydroxyalkylphenone (z. B. Irgacure® 184), Benzoinderivate, Benzilderivate, Dialkyloxyacetophenone.

Insbesondere kann es sich um sogenannte H-Abstraktoren handeln, welche ein Wasserstoffatom von der Polymerkette ablösen, z. B. handelt es sich hierbei um Photoinitiatoren mit einer Carbonylgruppe. Diese Carbonylgruppe schiebt sich in eine C-H Bindung unter Ausbildung einer C-C-O-H Gruppierung.

Genannt seien hier insbesondere Acetophenon, Benzophenon und deren Derivate.

Es können beide Klassen von Fotoinitiatoren allein oder auch im Gemisch verwendet werden. Vorzugsweise handelt es sich um H-Abstraktoren als Fotoinitiator.

Der Fotoinitiator oder zumindest einer der Fotoinitiatoren, falls ein Gemisch verwendet wird, kann an das Klebstoff-Polymer gebunden sein.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenon- oder Benzophenonderivate, welche mindestens eine, vorzugsweise eine, ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z. B. bis 100 C-Atome enthalten.

Geeignete Acetophenon- oder Benzophenonderivate sind z. B. in EP-A 346 734, EP-A 377 199 (1. Anspruch), DE-A 40 37 079 (1. Anspruch) und DE-A 38 44 444 (1. Anspruch) beschrieben und sind durch diesen Verweis auch in der vorliegenden Anmeldung offenbart. Bevorzugte Acetophenon- und Benzophenonderivate sind solche der Formel 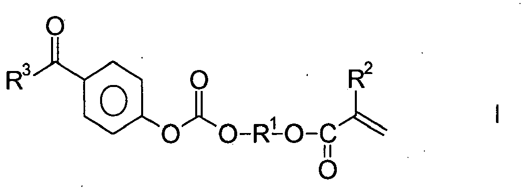 worin R¹ für einen organischen Rest mit bis zu 30 C-Atomen, R² für ein H-Atom oder eine Methylgruppe und R³ für eine gegebenenfalls substituierte Phenylgruppe oder eine C1-C4-Alkylgruppe steht.

R¹ steht besonders bevorzugt für eine Alkylengruppe, insbesondere für eine C2-C8-Alkylengruppe.

R³ steht besonders bevorzugt für eine Methylgruppe oder eine Phenylgruppe.

Geeignete UV-vernetzbare Haftklebstoffe enthalten im allgemeinen 0,0001 bis 0,5 mol, besonders bevorzugt 0,0002 bis 0,1, ganz besonders bevorzugt 0,003 bis 0,01 mol des Fotoinitiators, bzw. der als Fotoinitiator wirksamen, an das Polymer gebundenen Molekülgruppe, pro 100 g Haftklebstoff-Polymer.

Geeignete UV-vernetzbare Polymere sind unter dem Handelsnamen acResin® von BASF erhältlich.

Bei dem erfindungsgemäß verwendeten Haftklebstoff kann es sich um einen wässrigen Haftklebstoff oder Schmelzklebstoff, d. h. einen im wesentlichen lösemittel- und wasserfreien, aus der Schmelze zu verarbeitenden Haftklebstoff handeln.

Vorzugsweise handelt es sich um einen wässrigen Haftklebstoff.

Der wässrige Haftklebstoff enthält das Haftklebstoff-Polymer insbesondere in Form einer wässrigen Dispersion, wie sie insbesondere durch Emulsionspolymerisation erhältlich ist.

Die Glasübergangstemperatur (Tg) des Haftklebstoff-Polymeren beträgt vorzugsweise -65 bis +10 °C, besonders bevorzugt -65 bis 0 °C, ganz besonders bevorzugt -65 bis -10 °C, bzw. -65 bis -20 °C, in einer ganz besonders bevorzugten Ausführungsform beträgt die Glasübergangstemperatur -55 bis -30 °C, bzw. -50 bis -40 °C.

Die Glasübergangstemperatur des Polymeren lässt sich nach üblichen Methoden wie Differentialthermoanalyse oder Differential Scanning Calorimetrie (s. z.B. ASTM 3418/82, sog. "midpoint temperature" bestimmen.

Haftklebstoff- Polymere können durch Copolymerisation der Monomeren unter Verwendung der üblichen Polymerisationsinitiatoren sowie gegebenenfalls von Reglern hergestellt werden, wobei man bei den üblichen Temperaturen in Masse, in Emulsion, z. B. in Wasser oder flüssigen Kohlenwasserstoffen, oder in Lösung polymerisiert. Die Polymerisation, z. B. Massepolymerisation kann auch in einem Extruder durchgeführt werden. Besonders bevorzugt wird das Haftklebstoff-Polymer durch Emulsionspolymerisation hergestellt.

Der Haftklebstoff kann allein aus dem Bindemittel (Haftklebstoff-Polymer) bestehen oder auch noch weitere Zusatzstoffe enthalten. In Betracht kommen z. B. sogenannte klebrigmachende Harze (Tackifier).

Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Weitere Additive, welche dem Klebstoff zugesetzt werden können, sind z. B. Antioxidantien, Füllstoffe, Farbstoffe, Verlaufshilfsmittel.

Der Haftklebstoff und damit auch die äußere Schicht des Haftklebstoff besteht, abgesehen von Wasser oder sonstigen Lösemitteln, insbesondere zu mehr als 60 Gew. %, besonders bevorzugt zu mehr als 70 Gew.-% und ganz besonders bevorzugt zu mehr als 80 Gew.-% aus dem Haftklebstoff-Polymer.

Die Dicke der Haftklebstoffschicht kann z. B. 1 µm bis 3 mm, bevorzugt 10 µm bis 100 µm betragen.

### Zur Release-Beschichtung

Erfindungsgemäß hat der erfindungsgemäß verwendete Träger auf der anderen Seite (Rückseite) eine äußere Schicht einer unpolaren Release-Beschichtung. Ein Maß für die Polarität der Oberfläche ist der Kontaktwinkel, den der Rand eines Tropfen Wassers mit der auf der Substratoberfläche, auf der der Tropfen aufliegt, bildet. Bei einer sehr polaren Oberfläche ist die Benetzung gut, der Tropfen liegt flach auf der Oberfläche und der Winkel zwischen dem Rand und der Oberfläche ist klein. Bei einer sehr unpolaren Oberfläche ist die Benetzung schlecht, der Tropfen hat eine eher kugelige Form und die Kontaktfläche ist kleiner als der Tropfendurchmesser in der Mitte des Tropfens; der Winkel ist dann groß.

Der Kontaktwinkel eines Tropfen Wassers mit der Substratoberfläche ist bei 20°C größer als 85 °C, bevorzugt größer als 90°, besonders bevorzugt größer 95°.
Der Kontaktwinkel wird durch Bildanalyse, d. h. Projektion der Tropfenkontur auf einen Bildschirm und Auswertung bestimmt.

Die Release-Beschichtung kann aus einem beliebigen Material sein, es kann sich um eine Polymerfolie, die aufkaschiert oder coextrudiert wird, oder um einen flüssigen Release-Lack, der aufgetragen und verfilmt wird, handeln.

Im Fall einer Polymerfolie kommen Folien aus Polyolefinen, z. B. Polypropylen, orientiertem Polypropylen oder Polyethylen in Betracht. Die Polymerfolien sind an der äußeren Oberfläche vorzugsweise nicht vorbehandelt. Damit sich der gewünschte Kontaktwinkel einstellt, sollte keine elektrische Entladung ( Corona-Vorbehandlung) durchgeführt sein; auch sollten die Polymerfolien nicht mit polaren Primern beschichtete sein.

Vorzugsweise wird die Release-Beschichtung durch Auftragen eines flüsssigen Release-Lacks und anschließende Trocknung erhalten.

Bei dem Release-Lack handelt es sich vorzugsweise um eine Dispersion oder Lösung, bevorzugtes Lösungsmittel ist Wasser, mit Wasser mischbare organische Lösemittel oder deren Gemische. Insbesondere handelt es sich bei dem Lösemittel um Wasser oder eine Gemisch, welches zu mindestens 50 Gew. %, insbesondere zu mindestens 75 Gew. %, aus Wasser besteht.

Der Release-Lack enthält insbesondere ein synthetisches unpolares Polymer (im nachfolgenden kurz Release-Polymer genannt).

Das Release-Polymer ist vorzugsweise erhältlich durch radikalische Polymerisation von Monomeren. Vorzugsweise handelt es sich bei mehr als 60 Gew. %, insbesondere mehr als 70Gew.%, besonders bevorzugt mehr als 80 Gew. % und ganz besonders bevorzugt bei mehr als 90 Gew. % der Monomeren um aliphatische Kohlenwasserstoffe mit 2 bis 8 C Atomen und ein oder zwei Doppelbindungen. Besonders bevorzugt handelt es sich bei den Monomeren um aliphatische Kohlenwasserstoffe mit 2 bis 8, besonders bevorzugt 2 bis 4 C Atomen und einer Doppelbindung. Ganz besonders bevorzugt ist Ethylen.

Das Release Polymer kann neben dem unpolaren Monomer weitere Monomere als Aufbaukomponenten enthalten, insbesondere können sie auch Monomere mit polaren Gruppen, z. B. Hydroxylgruppen, Aminogruppen, Säuregruppen, Estergruppen oder Salzgruppen enthalten. Besonders bevorzugt sind Monomere mit Estergruppen oder Säuregruppen, insbesondere Carbonsäuregruppen. In Betracht kommen insbesondere Mono- oder Dicarbonsäuren wie Acrylsäure, Methacrylsäure oder Maleinsäure und Vinylester als Estergruppen enthaltende Monomere, insbesondere Vinylacetat.

Ein Gehalt an polaren Gruppen, z. B. Carbonsäuregruppen, im Release-Polymer (vorzugsweise Polyethylen) kann aber auch durch nachträgliche polymer-analoge Umsetzung, z. B. Oxidation mit Sauerstoff, erreicht werden.

Vorzugsweise hat das Release-Polymer einen Gehalt an polaren Gruppen (siehe oben), insbesondere von Säuregruppen besonders bevorzugt von Carbonsäuregruppen von 0,01 bis 1 Mol pro 100 g Release-Polymer; der Gehalt beträgt besonders bevorzugt mindestens 0,2 Mol pro 100 g Release-Polymer. Der Gehalt übersteigt im allgemeinen nicht 0,8 Mol, bzw. 0,6 Mol pro 100 g Release-Polymer.

Das Release-Polymer hat vorzugsweise ein gewichtsmittleres Molekulargewicht Mw von 1000 bis 100 00 g/Mol, insbesondere 1000 bis 40 000 g/Mol, besonders bevorzugt von 1000 bis 20.000 g/Mol, ganz besonders bevorzugt von 3000 bis 18.000 g/Mol und in einer besonderen Ausführungsform von 5.000 bis 15.000 g/Mol (bestimmt durch Gelpermeationschromatographie).

Der Release-Lack kann weitere Bestandteile enthalten; in Betracht kommen insbesondere Emulgatoren und Schutzkolloide zur Dispergierung des Release-Polymeren in Wasser.

Weitere Zusatzstoffe können Hilfsmittel wie Entschäumer, Hilfsmittel zur Einstellung des pH Werts (laugen, Puffer) oder Dispergierungshilfsmittel sein.

Verfahren zur Herstellung der Release-Polymeren sind bekannt. Im Falle von Polyethylen kommen insbesondere die üblichen katalytischen Polymerisationsverfahren in Betracht, das erhaltene Polymer kann abschließend in dem gewählten Lösemittel gelöst oder dispergiert werden.

Der Release-Lack kann in üblicher Weise aufgebracht werden. Die Auftragsmenge (ohne Lösemittel, Wasser, d.h. nach Trocknung) beträgt z. B. 1 bis 50 g /m², besonders bevorzugt von 1 bis 30 g /m², ganz besonders bevorzugt 1 bis 10 g /m².

Die getrocknete Schicht des Release-Lacks besteht insbesondere zu mehr als 60 Gew. %, besonders bevorzugt zu mehr als 80 Gew. % ganz besonders bevorzugt zu mehr als 90 Gew. % aus dem Release-Polymer.

### Zum Trägermaterial

Der Träger selbst kann z. B. aus Papier oder einer Polymerfolie bestehen.

Der Träger besteht insbesondere aus einer Polymerfolien, metallisierten Polymerfolie oder Corona vorbehandelten Polymerfolie. Genannt seien insbesondere Folien aus orientiertem Polypropylen, Polyethylen, vorzugsweise high density Polyethylen oder Polyester, z. B. Polyethylentherephthalat oder Polybutylentherephthalat.

### Zum beidseitig beschichteten Träger insgesamt

Die Haftklebstoff-Beschichtung kann direkt auf die Vorderseite des Trägers beschichtet sein, zwischen dem Träger und der Haftklebstoff-Beschichtung können sich jedoch auch noch andere Schichten befinden, z. B. Primerschichten oder Druckfarben - schichten (farbige oder schwarz-weiße Abbildungen). Wesentlich ist, dass es sich die Schicht des Haftklebers außen befindet.

Zwischen der Release-Beschichtung und dem Träger können sich weitere Schichten befinden; in Betracht kommen wiederum Schichten eines Primers, der die Haftung verbessert, und Druckfarbenschichten. Die äußere Release-Beschichtung hat auch die Aufgabe, die unteren Schichten, insbesondere die Druckfarbenschicht gegen äußere Einwirkungen zu schützen.

Bevorzugte beidseitig beschichtete Träger sind wie folgt aufgebaut, wobei die Reihenfolge der Schichten der räumlichen Anordnung entspricht:
Haftklebstoff-Beschichtung
Träger
Gegebenenfalls Primerschicht
Gegebenenfalls Druckfarbenschicht
Release-Beschichtung

Der beidseitig beschichtete Träger hat vorzugsweise insgesamt eine Dicke von 1 µm bis 2 mm, besonders bevorzugt von 1 µm bis 200 µm.

### Zur Verwendung

Insbesondere eignet sich der erfindungsgemäß verwendete beidseitig beschichtete Träger für die Kaltversiegelung. Unter Kaltversiegelung wird dabei ein Verfahren verstanden, bei dem die Temperatur in der Klebstoffschicht (und vorzugsweise auch die Temperatur der zu verklebenden Substrate) kleiner 40°C, insbesondere kleiner 30 °C bzw. kleiner 25 °C ist. Im allgemeinen wird die Kaltversiegelung bei gegebener Raumtemperatur, im allgemeinen also bei Temperaturen von 10 bis 30 °C, insbesondere 15 bis 25 °C durchgeführt. Vorzugsweise werden die Substrate unter Ausübung von Druck in Kontakt gebracht. Geeignet sind Drucke schon von wenigen Millibar bis zu mehreren Bar über Normaldruck (1 bar), genannt seine Drucke von 0,01 bis 5 bar, insbesondere von 0,1 bis 3 bar über Normaldruck. Die Siegelzeit (Zeit während der die Temperatur und gegebenenfalls der Druck aufrecht erhalten wird) beträgt z. b. 0,1 bis 20 Sekunden, insbesondere 0,1 bis 3 Sekunden, üblich ist insbesondere 0,5 Sekunden.

Der erfindungsgemäß verwendete Träger eignet sich daher zum Verbinden von zwei Substraten, dadurch gekennzeichnet, dass
- es sich bei beiden Substraten, die verklebt werden sollen, um einen erfindungsgemäß zu verwendenden, beidseitig beschichteten Träger handelt und
- die beiden Substrate mit den mit Haftklebstoff beschichteten Vorderseiten, gegebenenfalls unter Ausübung von Druck in Kontakt gebracht werden, wobei
- die Temperatur in dem Haftklebstoff kleiner 40 ° C ist (Kaltversiegelung).

Es handelt sich bei beiden zu verklebenden Substraten um einen erfindungsgemäß verwendeten Träger.

Der beidseitig beschichtete Träger wird insbesondere zur Herstellung von Verpackungen verwendet: Er kann dazu mit beliebigen anderen Substraten, insbesondere Polymerfolien (gegebenenfalls auch metallisierte oder Corona vorbehandelte Polymerfolien), durch Kaltversiegelung verklebt werden.

Der beidseitig beschichtete Träger wird mit sich selbst durch Kaltversiegelung verklebt, wobei jeweils die Haftklebstoff beschichteten Vorderseiten in Kontakt gebracht werden.

Die Verpackung wird durch Kaltversiegelung verschlossen, sobald das zu verpackende Gut eingefüllt ist.

Die Verpackungen eignen sich insbesondere für Lebensmittel.

Wesentliche Vorteile des erfindungsgemäßen verwendeten Trägers sind seine gute Kaltsiegelbarkeit und gute Blockfestigkeit der Vorderseite auf der Rückseite (Haftklebstoffschicht haftet nicht auf der Release-Schicht). Der Träger kann aufgerollt und später von der Rolle verarbeitet werden. Beim Aufrollen kommen die Vorderseite und die Rückseite des Trägers in direkten Kontakt. Ein Haften der Vorderseite auf der Rückseite würde den Träger unbrauchbar machen, der Träger lässt sich jedoch problemfrei verarbeiten.

### Beispiele

### Herstellung des beidseitig beschichteten Trägers

Als Träger wurde eine Folie aus orientiertem Polypropylen (oPP) verwendet.
Die Folie wurde auf der Rückseite mit einem Release-lack (0,07 mm Drahtrakel, 1,2 g/m2 beschichtet und 3 Minuten bei 90 °C getrocknet.

Als Release-Lack wurden verwendet:
- eine Polyamidlösung (zum Vergleich), Kontaktwinkel der Oberfläche mit Wasser: 85°
- Poligen ® WE1, eine Lösung eines niedermolekularen Polyethylen mit geringem Gehalt an Acrylsäure (Verkaufsprodukt der BASF, erfindungsgemäß); Kontaktwinkel der Oberfläche mit Wasser: 98 °

Auf der Vorderseite wurden handelsübliche, wässrige Haftklebstoffdispersionen beschichtet (0,1 mm Drahtrakel, Auftragsgewicht siehe Tabelle) und 30 Sekunden bei 105°C getrocknet.

Als Haftkleberdispersionen wurden verwendet:
Acronal® V 212, eine Polyacrylatdispersion der BASF
Acronal® DS 3547, eine Polyacrylatdispersion der BASF

### Prüfungen

### Siegelnahtfestigkeit

Aus den beidseitig beschichteten oPP Folien wurden 15 mm breite Streifen geschnitten, zwei Streifen wurden mit der Klebstoffseite aufeinander gelegt und am Siegelgerät 0,5 Sekunden mit 2,1 bar gesiegelt. Sofort nach der Siegelung wurden mit einer Abzugsgeschwindigkeit von 50 mm/min die Schälfestigkeiten in N/15 mm bestimmt.

### Blocktest

Die beidseitig beschichteten oPP Folien wurden mit der Release-Lack-Seite auf die Haftklebstoffseite gelegt und 24 Stunden mit 10 Tonnen Gewicht belastet; danach wurde die Schälfestigkeit mit einer Abzugsgeschwindigkeit von 800 mm/min in N/25 mm bestimmt. Die Klebstoffseite soll möglichst nicht auf dem Release-Lack haften, die erhaltenen Schälfestigkeit sollen daher möglichst klein sein.

### Ergebnisse

| Haftkleberdispersion | Acronal V 212 | Acronal DS 3574 |
|---|---|---|
| Auftragsgewicht des Haftklebstoffs in g/m2 | 4,14 | 2,88 |
| Siegelnahtfestigkeit (Haftklebstoff auf Haftklebstoff) | 1,45 | 1,46 |
| Blockfestigkeit Haftklebstoff auf Polyamid-Release-Lack | 0,3 | 0,45 |
| Blockfestigkeit Haftklebstoff auf Poligen Release-Lack | 0,11 | 0,07 |

## Patentansprüche

1. Verwendung beidseitig beschichteter Träger zum Verkleben durch Kaltversiegelung, **dadurch gekennzeichnet, dass** der Träger auf der einen Seite (im folgenden als Vorderseite bezeichnet) eine äußere Schicht eines Haftklebstoffs aufweist und auf der anderen Seite (im nachfolgenden als Rückseite bezeichnet) eine äußere Schicht einer unpolaren Release-Beschichtung aufweist, die bei 20°C mit Wasser einen Kontaktwinkel größer 85° ausbildet, wobei jeweils die mit dem Haftklebstoff beschichteten Vorderseiten in Kontakt gebracht werden.

2. Verwendung gemäß Anspruch 1, **dadurch gekennzeichnet, dass** die Haftklebstoffschicht zu mehr als 60 Gew. % aus einem synthetischen polymeren Bindemittel (im nachfolgenden kurz Haftklebstoff-polymer genannt) besteht.

3. Verwendung gemäß Anspruch 1 oder 2, **dadurch gekennzeichnet, dass** das Haftklebstoff-polymer durch radikalische Polymerisation von Monomeren erhältlich ist und es sich bei mehr als 50 Gew. % dieser Monomeren um sogenannte Hauptmonomere, ausgewählt aus C1 bis C20 Alkyl(meth)acrylaten, Vinylestern von bis zu 20 C-Atome enthaltenden Carbonsäuren, ethylenisch ungesättigten Nitrilen, Vinylhalogeniden, Vinylethern von 1 bis 10 C Atome enthaltenden Alkoholen, oder Mischungen dieser Monomeren, handelt.

4. Verwendung gemäß einem der Ansprüche 1 bis 3, **dadurch gekennzeichnet, dass** das Haftklebstoff-polymer zu mehr als 50 Gew. % aus C1 bis C20 Alkyl(meth)acrylaten besteht.

5. Verwendung gemäß einem der Ansprüche 1 bis 4, **dadurch gekennzeichnet, dass** es sich bei der Release-Beschichtung um einen Release-Lack handelt, der in flüssiger Form aufgetragen und dann getrocknet wird.

6. Verwendung gemäß einem der Ansprüche 1 bis 5, **dadurch gekennzeichnet, dass** die getrocknete Schicht des Release-Lacks zu mehr als 60 Gew. % aus einem synthetischen unpolaren Polymer (im nachfolgenden kurz Release-Polymer genannt) besteht.

7. Verwendung gemäß einem der Ansprüche 1 bis 6, **dadurch gekennzeichnet, dass** das Release-Polymer durch radikalische Polymerisation von Monomeren erhältlich ist und es sich bei mehr als 70 Gew. % der Monomeren um aliphatische Kohlenwasserstoffe mit 2 bis 8 C Atomen und ein oder zwei Doppelbindungen handelt.

8. Verwendung gemäß einem der Ansprüche 1 bis 7, **dadurch gekennzeichnet, dass** das Release-Polymer zu mehr als 70 Gew. % aus Ethylen besteht.

9. Verwendung gemäß einem der Ansprüche 1 bis 8, **dadurch gekennzeichnet, dass** das Release-Polymer ein zahlenmittleres Molgewicht von 1000 bis 100000 g/mol hat.

10. Verwendung gemäß einem der Ansprüche 1 bis 9, **dadurch gekennzeichnet, dass** es sich bei dem Träger um Papier oder eine Polymerfolie handelt.

11. Verwendung gemäß einem der Ansprüche 1 bis 10, **dadurch gekennzeichnet, dass** sich zwischen dem Träger und der äußeren Schicht des Release-Lacks weitere Schichten, z. B. eine Primer-Schicht und/oder eine Druckfarbenschicht befinden können.

12. Verwendung gemäß einem der Ansprüche 1 bis 11 mit einer Dicke des beidseitig beschichteten Trägers von insgesamt 0,1 µm bis 2 mm.

13. Verfahren zum Verbinden von zwei Substraten, **dadurch gekennzeichnet, dass**
- es sich bei beiden Substraten, die verklebt werden sollen, um einen Träger mit den auf Träger bezogenen Merkmalen gemäß einem der Ansprüche 1 bis 12 handelt und
- die beiden Substrate mit den mit Haftklebstoff beschichteten Vorderseiten, gegebenenfalls unter Ausübung von Druck, in Kontakt gebracht werden, wobei
- die Temperatur in dem Haftklebstoff kleiner 40 ° C ist (Kaltversiegelung).

14. Verwendung des beidseitig beschichteten Trägers gemäß einem der Ansprüche 1 bis 12 zur Herstellung von kaltsiegelbaren Verpackungen.

15. Verwendung des beidseitig beschichteten Trägers gemäß einem der Ansprüche 1 bis 12 zur Herstellung von kaltsiegelbaren Verpackungen für Lebensmittel.

## Claims

1. The use of double-sidedly coated backings for bonding by cold sealing, wherein the backing comprises on one side (referred to below as face) an outer layer of a pressure-sensitive adhesive and on the other side (referred to below as reverse) an outer layer of an apolar release coating forming a contact angle of greater than 85° with water at 20°C, in each case the faces coated with the pressure-sensitive adhesive being contacted.

2. The use according to claim 1, wherein the pressure-sensitive adhesive layer is composed of more than 60% by weight of a synthetic polymeric binder (referred to below as PSA (pressure-sensitive adhesive) polymer for short).

3. The use according to claim 1 or 2, wherein the PSA polymer is obtainable by free-radical addition polymerization of monomers and more than 50% by weight of these monomers are what are called principal monomers selected from C1 to C20 alkyl (meth)acrylates, vinyl esters of carboxylic acids comprising up to 20 C atoms, ethylenically unsaturated nitriles, vinyl halides, vinyl ethers of alcohols comprising 1 to 10 C atoms, or mixtures of these monomers.

4. The use according to any one of claims 1 to 3, wherein the PSA polymer is composed of more than 50% by weight of C1 to C20 alkyl (meth)acrylates.

5. The use according to any one of claims 1 to 4, wherein the release coating is a release varnish which is applied in liquid form and then dried.

6. The use according to any one of claims 1 to 5, wherein the dried layer of the release varnish is composed of more than 60% by weight of a synthetic apolar polymer (referred to below as release polymer for short).

7. The use according to any one of claims 1 to 6, wherein the release polymer is obtainable by free-radical addition polymerization of monomers and more than 70% by weight of the monomers are aliphatic hydrocarbons having 2 to 8 C atoms and one or two double bonds.

8. The use according to any one of claims 1 to 7, wherein the release polymer is composed of more than 70% by weight of ethylene.

9. The use according to any one of claims 1 to 8, wherein the release polymer has a number-average molar weight of 1000 to 100 000 g/mol.

10. The use according to any one of claims 1 to 9, wherein the backing is paper or a polymer film.

11. The use according to any one of claims 1 to 10, wherein between the backing and the outer layer of the release varnish there may be further layers, such as a primer layer and/or a printing-ink layer.

12. The use according to any one of claims 1 to 11, having a thickness of the double-sidedly coated backing totaling 0.1 µm to 2 mm.

13. A method of joining two substrates, wherein
- the two substrates to be bonded comprise a backing having the features relating to the backing according to any one of claims 1 to 12 and
- the two substrates having the faces coated with pressure-sensitive adhesive are contacted, optionally with exertion of pressure,
- the temperature in the pressure-sensitive adhesive being less than 40°C (cold sealing).

14. The use of the double-sidedly coated backing according to any one of claims 1 to 12 for producing cold-sealable packaging.

15. The use of the double-sidedly coated backing according to any one of claims 1 to 12 for producing cold-sealable food packaging.

## Revendications

1. Utilisation d'un support revêtu sur deux faces pour le collage par scellage à froid, **caractérisée en ce que** le support présente sur une face (appelée face avant dans la suite) une couche extérieure d'un autoadhésif et sur l'autre face (appelée face dorsale dans la suite) une couche extérieure d'un revêtement antiadhésif non polaire, qui forme à 20°C un angle de contact avec l'eau supérieur à 85°, les faces avant revêtues de l'autoadhésif étant à chaque fois mises en contact.

2. Utilisation selon la revendication 1, **caractérisée en ce que** la couche autoadhésive est constituée, à raison de plus de 60% en poids, d'un liant polymère synthétique (appelé dans la suite, en abrégé, polymère autoadhésif).

3. Utilisation selon la revendication 1 ou 2, **caractérisée en ce que** le polymère autoadhésif peut être obtenu par polymérisation radicalaire de monomères et il s'agit, pour plus de 50% en poids de ces monomères, de monomères appelés principaux, choisis parmi les (méth)acrylates d'alkyle en C₁ à C₂₀, les esters vinyliques d'acides carboxyliques contenant jusqu'à 20 atomes de carbone, les nitriles éthyléniquement insaturés, les halogénures de vinyle, les vinyléthers d'alcools contenant 1 à 10 atomes de carbone ou de mélanges de ces monomères.

4. Utilisation selon l'une quelconque des revendications 1 à 3, **caractérisée en ce que** le polymère autoadhésif est constitué à raison de plus de 50% en poids de (méth)acrylates d'alkyle en C₁ à C₂₀.

5. Utilisation selon l'une quelconque des revendications 1 à 4, **caractérisée en ce qu'**il s'agit, pour le revêtement antiadhésif, d'une laque antiadhésive, qui est appliquée sous forme liquide, puis séchée.

6. Utilisation selon l'une quelconque des revendications 1 à 5, **caractérisée en ce que** la couche séchée de la laque antiadhésive est constituée, à raison de plus de 60% en poids, d'un polymère synthétique non polaire (appelé dans la suite, en abrégé, polymère antiadhésif).

7. Utilisation selon l'une quelconque des revendications 1 à 6, **caractérisée en ce que** le polymère antiadhésif peut être obtenu par polymérisation radicalaire des monomères et il s'agit, pour plus de 70% en poids des monomères, d'hydrocarbures aliphatiques comprenant 2 à 8 atomes de carbone et une ou deux doubles liaisons.

8. Utilisation selon l'une quelconque des revendications 1 à 7, **caractérisée en ce que** le polymère antiadhésif est constitué, à raison de plus de 70% en poids, d'éthylène.

9. Utilisation selon l'une quelconque des revendications 1 à 8, **caractérisée en ce que** le polymère antiadhésif présente un poids moléculaire numérique moyen de 1000 à 100 000 g/mole.

10. Utilisation selon l'une quelconque des revendications 1 à 9, **caractérisée en ce qu'**il s'agit, pour le support, de papier ou d'une feuille de polymère.

11. Utilisation selon l'une quelconque des revendications 1 à 10, **caractérisée en ce que** d'autres couches, par exemple une couche d'apprêt et/ou une couche d'encre d'imprimerie, peuvent se trouver entre le support et la couche extérieure de la laque antiadhésive.

12. Utilisation selon l'une quelconque des revendications 1 à 11, le support revêtu sur les deux faces présentant une épaisseur d'au total 0,1 µm à 2 mm.

13. Procédé pour assembler deux substrats, **caractérisé en ce que**
- il s'agit, pour les deux substrats qui doivent être collés, d'un support présentant les caractéristiques se rapportant au support selon l'une quelconque des revendications 1 à 12 et
- les deux substrats sont mis en contact avec les faces avant revêtues de l'autoadhésif, le cas échéant en exerçant de la pression,
- la température dans l'autoadhésif étant inférieure à 40°C (scellage à froid).

14. Utilisation du support revêtu sur les deux faces selon l'une quelconque des revendications 1 à 12 pour la réalisation d'emballages pouvant être scellés à froid.

15. Utilisation du support revêtu sur les deux faces selon l'une quelconque des revendications 1 à 12 pour la réalisation d'emballages pouvant être scellés à froid destinés à des aliments.
